# EUROPÄISCHE PATENTANMELDUNG

(11) **EP 4 814 634 A1**
(43) Veröffentlichungstag der Anmeldung: **30.09.2026**
(21) Anmeldenummer: 25166718.4
(22) Anmeldetag: 27.03.2025
(51) Int. Cl.: G05B 19/4065, G05B 19/4069, G05B 19/418

(54) **VERFAHREN ZUM BESTIMMEN EINES QUALITÄTSMERKMALS BEI EINER SPANENDEN BEARBEITUNG**

(71) Anmelder: MTU Aero Engines AG, 80995 München (DE)
(72) Erfinder: Arnold, Oliver, 80995 München (DE)

(57) **Zusammenfassung**

Die vorliegende Erfindung betrifft ein Verfahren zum Bestimmen eines Qualitätsmerkmals (60) eines Werkstücks (20), das spanend bearbeitet wird, umfassend die Schritte:
- Spanendes Bearbeiten (100) des Werkstücks (20) mit einem Bearbeitungswerkzeug (12);
- Bestimmen (101) eines Werkzeugweges (15) des Bearbeitungswerkzeugs (12) und zumindest eines dynamischen Prozessparameters (25) während des Bearbeitens;
- Bestimmen (103) einer virtuellen Werkstückkontur (40) des Werkstücks (20) anhand einer Werkzeuggeometrie (32) des Bearbeitungswerkzeugs (12) und des erfassten Werkzeugweges (15);
- Ermitteln (104) einer Abweichung (45) der virtuellen Werkstückkontur (40) von einem Soll-Zustand (41) an zumindest einigen Stellen der virtuellen Werkstückkontur (40);
- Vorhersagen (106) einer geometrischen Abweichung (65) des bearbeiteten Werkstücks (20) von einem Soll-Zustand mithilfe eines Machine-Learning-Systems (50), anhand
∘ der Abweichung (45) der virtuellen Werkstückkontur (40);
∘ des zumindest einen dynamischen Prozessparameters (25).

## Beschreibung

### Technisches Gebiet

Die vorliegende Erfindung betrifft ein Verfahren zum Bestimmen eines Qualitätsmerkmals eines Werkstücks, das spanend bearbeitet wird.

### Stand der Technik

Bei der spanenden Bearbeitung kann es sich bspw. um Fräsen handeln, im Allgemeinen aber z. B. auch um Drehen oder Bohren. Wie nachstehend im Detail erläutert, kann eine bevorzugte Anwendung in der Herstellung von Bauteilen für Strömungsmaschinen liegen, insbesondere für Flugtriebwerke. Deren Bestandteile können im Betrieb z. B. hohen Temperaturen und großen mechanischen Belastungen ausgesetzt sein. Dies kann bspw. im Gaskanal angeordnete Bauteile betreffen, aber auch Bauteile außerhalb davon, wie z. B. Rotorscheiben. Unabhängig von der Anwendung im Einzelnen können aufgrund der hohen Anforderungen an die Bauteile besondere Werkstoffe zum Einsatz kommen und/oder strenge Kriterien für die Maßhaltigkeit der Bauteile gelten. Hieraus können sich besondere Anforderungen in der Herstellung solcher Bauteile durch spanende Bearbeitung ergeben. Dies soll ein vorteilhaftes Anwendungsumfeld illustrieren, den Gegenstand aber zunächst nicht in seiner Allgemeinheit beschränken.

### Darstellung der Erfindung

Der vorliegenden Erfindung liegt das technische Problem zugrunde, ein vorteilhaftes Verfahren zum Bestimmen eines Qualitätsmerkmals eines Werkstücks anzugeben, welches spanend bearbeitet wird.

Dies wird mit den Merkmalen nach Anspruch 1 gelöst. Zusätzlich zur spanenden Bearbeitung des Werkstücks mit einem Bearbeitungswerkzeug wird verfahrensgemäß ein Werkzeugweg des Bearbeitungswerkzeugs bestimmt und wird zumindest ein dynamischer Prozessparameter bestimmt, bspw. das Spindeldrehmoment (siehe nachstehend weiter im Detail). Anhand des Werkzeugweges wird, zusammen mit der Form bzw. Geometrie des Bearbeitungswerkzeugs ("Werkzeuggeometrie"), eine virtuelle Werkstückkontur des Werkstücks bestimmt. Im Weiteren wird eine Abweichung ermittelt, welche diese virtuelle Werkstückkontur von einem Soll-Zustand hat. Dieser Abgleich erfolgt an zumindest einigen Stellen der virtuellen Werkstückkontur, also punktuell und nicht zwingend über die gesamte Kontur hinweg. Wie nachstehend im Detail erläutert, können diese Auswertungs- bzw. Messstellen dahingehend festgelegt werden, dass dort auch am eigentlichen Werkstück nach der spanenden Bearbeitung geometrische Merkmale gemessen werden und/oder an baugleichen Werkstücken gemessen wurden.

Mithilfe eines Machine-Learning-Systems (MLS) wird anhand dieser Abweichung, welche die virtuelle Werkstückkontur vom Soll-Zustand zeigt, ein Qualitätsmerkmal vorhergesagt, insbesondere eine geometrische Abweichung, welche das bearbeitete Werkstück von einem Soll-Zustand hat. Das Qualitätsmerkmal bzw. die geometrische Abweichung ist hierbei der Ausgabewert des trainierten MLS, wobei als Eingabewert zusätzlich zur Abweichung der virtuellen Werkstückkontur der zumindest eine dynamische Prozessparameter der spanenden Bearbeitung eingeht. Hierbei kann es sich bspw. um ein Drehmoment des Bearbeitungswerkzeugs handeln, z. B. ein während der spanenden Bearbeitung gemessenes Spindeldrehmoment (siehe unten im Detail).

Indem über das MLS einerseits die Abweichung der virtuellen Werkstückkontur und andererseits der zumindest eine Prozessparameter berücksichtigt werden, lassen sich sowohl ein Einfluss der Maschine als auch Prozesseinflüsse berücksichtigen. Auch wenn die Geometrie des fertig bearbeiteten Werkstücks, also dessen Abweichung von einem Soll-Zustand, eine starke Korrelation mit den dynamischen Größen, also dem zumindest einen dynamischen Prozessparameter zeigt, kann dieser Zusammenhang im Einzelnen schwer analytisch zu modellieren sein. Durch ein Trainieren des MLS anhand der geometrischen Abweichungen, die an spanend bearbeiteten Werkstücken gemessen wurden, haben die Erfinder ein MLS mit hinreichend genauer Vorhersagequalität erhalten, also mit akzeptabler Abweichung zwischen gemessener und vorhergesagter geometrischer Abweichung.

Die gesamte Abweichung ergibt sich hierbei als Summe von Positionierungenauigkeit der Maschine und Einfluss des dynamischen Prozessparameters (bspw. Effekten der Prozesskräfte). Die Prozesskräfte können z. B. durch das Drehmoment erfasst werden und fallen unter "dynamisch", weil die Kräfte über die Bearbeitung schwanken können. Generell meint "dynamisch" bspw., dass der betreffende Prozessparameter unmittelbar und/oder direkt aus der fortlaufenden Wechselwirkung zwischen Werkzeug und Werkstück resultiert. Der dynamische Prozessparameter kann während der spanenden Bearbeitung zeitlichen Schwankungen unterliegen, insbesondere kann es sich um eine Prozesskraft oder eine damit, insbesondere unmittelbar, direkt und/oder korrelierend, zusammenhängende Größe handeln.

Die Positioniergenauigkeit, die optional zusätzlich erfasst werden kann, resultiert bspw. nicht direkt aus der Wechselwirkung zwischen Werkzeug und Werkstück ist kein dynamischer Prozessparameter.

Generell kann die Geometrie- und Prozessparameter-basierte Vorhersage der geometrischen Abweichung bspw. hinsichtlich eines Durchsatzes in der Fertigung von Vorteil sein, etwa wenn der Umfang tatsächlicher Messungen am Werkstück zumindest verringert wird. In anderen Worten lassen sich Messungen bzw. Abnahmeprüfungen nach der spanenden Bearbeitung zumindest teilweise virtualisieren bzw. gezielt unterstützen (unnötige Messungen können reduziert bzw. kritische Messungen gezielt veranlasst werden). Ferner können frühzeitig, z. B. bereits während der Herstellung, erzeugte bzw. gesammelte Werkstückinformationen auch die Prozesstransparenz erhöhen und etwaige Probleme erkennbar machen. Dies können bspw. Positionierprobleme auf der oder den Achsen der Bearbeitungsmaschine sein, die sich z. B. verschleißbedingt ergeben können. Durch die vorliegende Berücksichtigung von geometrischen und dynamischen Prozessparametern wird einerseits das Positionierverhalten der Bearbeitungsmaschine erfasst ("wie wird auf der bzw. den Achsen eingestellt?") und wird zugleich abgebildet, welche Kräfte auf einer jeweiligen Position auf das Bearbeitungswerkzeug wirken bzw. gewirkt haben.

Bevorzugte Ausgestaltungen finden sich in der gesamten Offenbarung und insbesondere in den abhängigen Ansprüchen, wobei bei der Darstellung der Merkmale nicht immer im Einzelnen zwischen Verfahrens- bzw. Verwendungs- oder Vorrichtungsaspekten unterschieden wird; jedenfalls implizit ist die Offenbarung hinsichtlich sämtlicher Anspruchskategorien zu lesen.

Gemäß einer bevorzugten Ausführungsform wird die Werkzeuggeometrie durch Vermessen des Bearbeitungswerkzeugs bestimmt. Dies kann bspw. mit einem Scanner erfolgen, etwa an einem Punkt bzw. infolge einer Relativbewegung entlang einer Linie. Hierbei kann ein dreidimensionales Abbild der Oberfläche des Bearbeitungswerkzeugs erstellt werden, jedenfalls von einem Bereich der Oberfläche. Hierfür kann z. B. ein Laserscanner genutzt werden, mit dessen Laserstrahl die Oberfläche des Bearbeitungswerkzeugs abgetastet wird. Unabhängig vom Scanner-Typ im Einzelnen kann das Bearbeitungswerkzeug bspw. zumindest vor der spanenden Bearbeitung des Werkstücks vermessen werden. Bei der Bestimmung der virtuellen Bauteilkontur geht dann die tatsächliche Geometrie des Bearbeitungswerkzeugs ein, werden also bspw. etwaige verschleiß- oder anderweitig bedingte Abweichungen des Bearbeitungswerkzeugs von einem Soll-Zustand berücksichtigt.

Gemäß einer bevorzugten Ausführungsform wird der zumindest eine Prozessparameter während der spanenden Bearbeitung des Werkstücks gemessen, bevorzugt kontinuierlich oder zumindest quasi-kontinuierlich. Damit kann bezogen auf den Werkzeugweg z. B. zumindest an jenen Stellen der virtuellen Werkstückkontur, an welchen deren Abweichung ermittelt wird, zusätzlich auch der zumindest eine Prozessparameter vorliegen. Der Prozessparameter wird dabei während der spanenden Bearbeitung sensorisch erfasst bzw. ausgelesen, siehe nachstehend im Detail.

Gemäß einer bevorzugten Ausführungsform umfasst der zumindest eine Prozessparameter ein Drehmoment des Bearbeitungswerkzeugs. Dieses kann z. B. auch indirekt ausgewertet werden, etwa über einen Motorstrom des Elektromotors, welcher das Bearbeitungswerkzeug bei der Bearbeitung des Werkstücks in Rotation versetzt. Unabhängig von der Messung im Einzelnen kann das Spindeldrehmoment dahingehend gut geeignet sein, dass es gut messbar ist und zudem eine starke Korrelation mit dem Qualitätsmerkmal zeigt, insbesondere der geometrischen Abweichung.

Gemäß einer bevorzugten Ausführungsform wird der Werkzeugweg aus der Bearbeitungsmaschine ausgelesen, in welcher das Werkstück mit dem Bearbeitungswerkzeug bearbeitet wird. Die virtuelle Werkstückkontur wird dann anhand des ausgelesenen Werkzeugwegs bestimmt. Bevorzugt wird der Werkzeugweg während der spanenden Bearbeitung ausgelesen, werden also die auf der oder den Achsen der Bearbeitungsmaschine für das Bearbeitungswerkzeug eingestellten Positionen während der spanenden Bearbeitung des Werkstücks ausgelesen bzw. abgespeichert (sie können in situ genutzt oder einer späteren Auswertung zugeführt werden). Bevorzugt wird also während der spanenden Bearbeitung die tatsächliche Bearbeitungswerkzeug-Position bestimmt und wird hieraus, zusammen mit der gemessenen Werkzeuggeometrie (Oberflächenbild des Bearbeitungswerkzeugs), die Werkstückkontur berechnet.

Gemäß einer bevorzugten Ausführungsform wird aus der Bearbeitungsmaschine (auch) eine Werkzeugorientierung ausgelesen. Die Werkzeugorientierung kann bspw. über einen oder mehrere Freiheitsgrade abgebildet werden, z. B. einen Anstellwinkel relativ zur Fahrtrichtung und einen Anstellwinkel senkrecht zur Fahrtrichtung. Unabhängig von diesen Details kann mit der zusätzlichen Berücksichtigung der Werkzeugorientierung auch bei komplexeren Verfahren bzw. Geometrien, etwa beim Fräsen einer dreidimensional konturierten Oberfläche, ein Kontaktpunkt zwischen Bearbeitungswerkzeug und Werkstück bestimmt werden. Auch in solchen Fällen lässt sich die virtuelle Werkstückkontur damit zuverlässig bestimmen.

Gemäß einer bevorzugten Ausführungsform wird eine aus der Bearbeitungsmaschine ausgelesene Größe einer Datentransformation unterzogen, was bspw. den Werkzeugweg und/oder die Werkzeugorientierung betreffen kann. Hierbei werden die Daten aus dem Maschinen-Koordinatensystem, bspw. die über den Zeitverlauf erfassten Positionen der Werkzeugachse(n), in ein Koordinatensystem des Werkstücks transformiert. So können aus den ausgelesenen Achspositionen bspw. der Werkzeugweg und/oder die Werkzeugorientierung bestimmt werden. In anderen Worten wird aus Achspositionen, sowie der bevorzugt gemessenen Werkzeuggeometrie, der jeweilige Kontaktpunkt bzw. im zeitlichen Integral eine Kontaktfläche zwischen Werkzeug und Werkstück berechnet.

Gemäß einer bevorzugten Ausführungsform wird, in Abhängigkeit von der vorhergesagten geometrischen Abweichung, regelnd in die spanende Bearbeitung des Werkstücks eingegriffen und/oder wird die spanende Bearbeitung unterbrochen. Eine Unterbrechung kann bspw. zum Neu-Justieren oder Teiletausch genutzt werden, etwa wenn der zumindest eine Prozessparameter einen (übermäßigen) Verschleiß anzeigt. Ein regelnder Eingriff kann z. B. dahingehend erfolgen, dass die Spindeldrehzahl angepasst wird.

Gemäß einer bevorzugten Ausführungsform umfasst das Machine-Learning-System ein lineares Modell, wobei im Allgemeinen auch ein nicht-lineares Künstliches Neuronales Netzwerk KNN verwendet werden kann.

Wie vorstehend erwähnt, ergibt sich die gesamte Abweichung als Summe der Positionierungenauigkeit der Maschine und des dynamischen Prozessparameters (Effekte der Prozesskräfte). Im Falle eines linearen Modelles kann die Abweichung A linear mit den Eingangsgrößen, z. B. Drehmoment D, Positionierungenauigkeit der Maschine P, optional auch weiteren Eingangsgrößen oder Prozessparametern zusammenhangen: $A = xD + yP + z$

Die Parameter x, y, z (Konstanten) können mithilfe des Trainings ermittelt werden. Die Parameter werden mit einem Regressionsverfahren auf die Zielgrößen angepasst wurden.

Andere Modelle bzw. Zusammenhänge, die insbesondere mithilfe künstlicher neuronaler Netzte (KNN) ermittelt werden können, sind ebenfalls möglich. $D , P - > KNN - > A$

Das KNN kann z. B. 10 - 20 Schichten (Layer), z. B. in einer Ausführung genau 12 Schichten, einschließlich Ein- und Ausgebeschicht aufweisen. Jede Schicht kann z. B. 5 - 10 Knoten (Nodes), z. B. in einer Ausführung genau 7 Knoten, aufweisen.

Die Trainingsdaten können die Parameter D, P, A umfassen, die in der Produktion über einen bestimmten Zeitraum, in einer Ausführung bspw. über einen Monat, für mehrere Bauteile, z. B. 80 Bauteile, gemessen und/oder ermittelt wurden. In einer Ausführung umfassen die Daten D(t, Bauteil), P(t, Bauteil), A(t, Bauteil), zwischen 40 und 200 Wertepaare, z. B. 120.

Das Machine-Learning-System kann zusätzlich oder alternativ zum dem obigen linearen bzw. KNN-Modell(Zusammenhang / Struktur) auch ein oder mehrere andere Modelle umfassen, z. B. eines oder mehrerer der folgenden Modelle: random forest, decision tree, support vector machine, Gradient Boosting Machines, Ridge Regression, Lasso Regression, Polynomial Regression.

Die Erfindung betrifft auch ein Verfahren zum Herstellen eines Bauteils für eine Strömungsmaschine, wobei das Bauteil durch spanendes Bearbeiten eines Werkstücks hergestellt wird und hierbei ein Qualitätsmerkmal, insbesondere eine geometrische Abweichung, in einer vorliegend geschilderten Weise vorhergesagt wird. Wie eingangs erläutert, können bei den Bauteilen von Strömungsmaschinen besondere Qualitätsanforderungen bestehen, insbesondere bei Flugtriebwerksteilen. Bei dem Bauteil kann es sich bspw. um eine Scheibe, insbesondere eine Turbinen- oder Verdichterscheibe, oder eine Blisk (Bladed disk), insbesondere eine Turbinen- oder Verdichterblisk, handeln. Wie nachstehend im Detail erläutert, kann das Verfahren speziell bei solchen kritischen und/oder sog. Klasse-1-Bauteilen vorteilhaft sein.

Eine bevorzugte Ausführungsform betrifft ein Verfahren zum Überwachen der Fertigung eines Bauteils, welches wie vorstehend geschildert hergestellt wird. In anderen Worten kann das Herstellungsverfahren bevorzugt ein Überwachen umfassen. Wenn das Qualitätsmerkmal eine vordefinierte Schwelle erreicht, kann bspw. eine Gegenmaßnahme ergriffen werden, z. B. ein Rekalibrieren der Fertigungsmaschine, eine Wartungsmaßnahme und/oder eine Prüfung und Änderung bei Fertigungshilfsmitteln. Eine Wartungsmaßnahme kann bspw. ein Tausch einer verschlissenen Achse der Fertigungsmaschine oder ein Tausch des Bearbeitungs- bzw. Spanwerkzeugs sein. Ein Fertigungshilfsmittel kann z. B. die Bauteilaufnahmevorrichtung sein.

Alternativ oder zusätzlich kann aber bspw. auch softwareseitig eine Gegenmaßnahme ergriffen werden, bspw. indem für ein NC-Programm ein anderer, z. B. stabilerer, Werkzeugpfad (x(t),y(t),z(t),t) bestimmt und für die Bearbeitung der folgenden Bauteile verwendet wird.

Eine Überwachung kann im Besonderen bei der Herstellung kritischer Bauteile (siehe vorne) von Vorteil sein, bei denen nicht in den Fertigungsprozess eingegriffen werden soll. Direkt im Anschluss an die Fertigstellung eines Bauteils kann mithilfe der Erfindung das Qualitätsmerkmal, z. B. die Abweichung, des gefertigten Bauteils vorhergesagt oder ermittelt werden. Solche Vorhersagen können im Rahmen eines Monitorings oder einer, insbesondere fortlaufenden, Prozessbeurteilung bzw. Prozessbewertung in der Fertigung verwendet werden, bspw. für eine Trendanalyse oder Trendüberwachung. Wenn der Trend des Qualitätsmerkmals eine kritische Schwelle erreicht, kann dies erkannt und können Gegenmaßnahmen ergriffen werden, siehe vorstehend.

Die Erfindung betrifft ferner ein Verfahren zum Herstellen einer Strömungsmaschine, insbesondere eines Flugtriebwerks, wobei zumindest ein Bauteil der Strömungsmaschine in einer vorliegend geschilderten Weise zerspanend hergestellt wird.

Die Erfindung betrifft ferner ein Verfahren zum Trainieren eines Machine-Learning-Systems (MLS) zum Vorhersagen eines Qualitätsmerkmals eines Werkstücks, welches mit einem Bearbeitungswerkzeug spanend bearbeitet wird. Dabei umfasst das Trainieren
- ein Einlesen zumindest eines Prozessparameters, der bei der spanenden Bearbeitung eines Werkstücks erfasst wurde;
- ein Einlesen einer virtuellen Werkstückkontur des Werkstücks, welche anhand einer Werkzeuggeometrie und eines Werkzeugweges bestimmt wurde;
- ein Ermitteln einer Abweichung der virtuellen Werkstückkontur von einem Soll-Zustand an zumindest einigen Stellen der virtuellen Werkstückkontur;
- ein Abgleichen einer geometrischen Abweichung, die an dem spanend bearbeiteten Werkstück bezogen auf einen Soll-Zustand gemessen wurde mit einer geometrischen Abweichung, die das MLS anhand der Abweichung der virtuellen Werkstückkontur und des zumindest einen Prozessparameters vorhersagt.

Wie vorstehend geschildert, kann das MLS insbesondere zum Vorhersagen von Abweichung bei kritischen und/oder sog. Klasse-1-Bauteilen trainiert werden. Es kann bspw. zum Vorhersagen von Qualitätsmaßen an Blisken trainiert werden. Ein Bereich, in dem Eingangsvariable der Trainingsdaten zu variieren sind, kann hierbei anhand historischer Daten aus der Fertigung bestimmt werden. Es werden bspw. über eine Vielzahl Bauteile Daten gesammelt, z. B. über 100 Bauteile, und dann auf zukünftige Bauteile angewendet. Die Daten können bspw. während der Fertigung gesammelt bzw. erfasst werden und zentral abgelegt werden, bspw. auf einem Laufwerk gespeichert.

Ferner richtet sich die Erfindung auf ein System zum spanenden Bearbeiten eines Werkstücks, welches eine Bearbeitungsmaschine aufweist. Dabei ist das System dazu eingerichtet, eine virtuelle Werkstückkontur und deren Abweichung von einem Soll-Zustand zu ermitteln. Bevorzugt weist das System zusätzlich ein Machine-Learning-System auf, das dazu eingerichtet ist, eine geometrische Abweichung vorherzusagen.

Die Erfindung betrifft ferner ein Computerprogrammprodukt, umfassend Befehle, die bei einer Ausführung durch eine Rechnereinheit diese veranlassen, eine geometrische Abweichung vorherzusagen.

### Kurze Beschreibung der Zeichnungen

Im Folgenden wird die Erfindung anhand eines Ausführungsbeispiels näher erläutert, wobei auch weiterhin nicht im Einzelnen zwischen den unterschiedlichen Anspruchskategorien unterschieden wird.

Im Einzelnen zeigt
- Figur 1: ein System zum spanenden Bearbeiten eines Werkstücks und zur Bestimmung einer geometrischen Abweichung des Werkstücks;
- Figur 2 a,b: eine Zusammenfassung einiger Verfahrensschritte in einem Ablaufdiagramm;
- Figur 2c: ein KNN in schematischer Darstellung;
- Figur 3: ein Mantelstromtriebwerk in einem schematischen Längsschnitt zur Illustration eines Anwendungsumfelds.

### Bevorzugte Ausführung der Erfindung

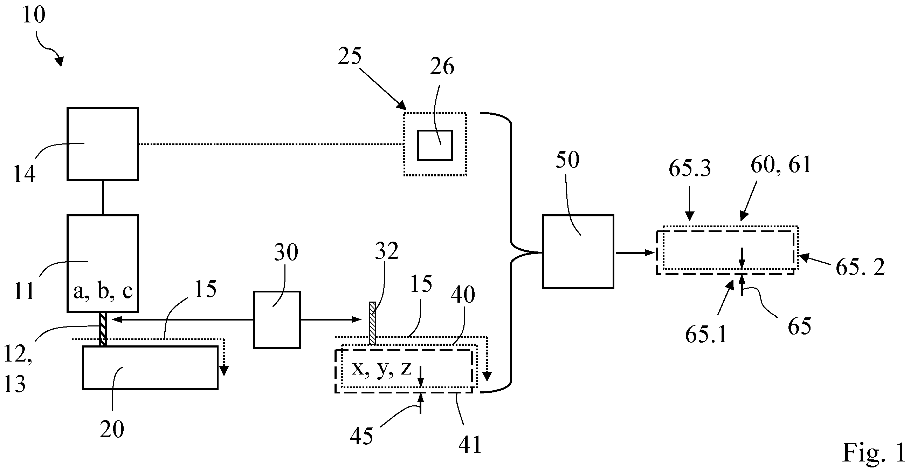

**Figur 1** zeigt ein System 10, welches eine Bearbeitungsmaschine 11 mit einem Bearbeitungswerkzeug 12 aufweist, im vorliegenden Beispiel einem Fräswerkzeug 13. Mit diesem wird ein Werkstück 20 spanend bearbeitet, wobei das Bearbeitungswerkzeug 12 entlang eines Werkzeugweges 15 bewegt wird. Der Werkzeugweg 15 ergibt sich hierbei aus einem NC-Datensatz, anhand dessen die Bearbeitungsmaschine 11 bzw. ihre Steuereinheit 14 das Bearbeitungswerkzeug 12 bewegt.

Vorliegend werden bei der spanenden Bearbeitung des Werkstücks die Koordinaten a, b, c, die auf den einzelnen Achsen der Bearbeitungsmaschine während der Bearbeitung im Zeitverlauf eingenommen werden, aus der Bearbeitungsmaschine 11 ausgelesen. Diese maschineninternen Koordinaten werden in ein Koordinatensystem des Werkstücks transformiert, also in Positionskoordinaten x, y, z umgerechnet. Damit liegt der während der spanenden Bearbeitung abgefahrene Werkzeugweg 15 virtualisiert vor. Zusätzlich wird mit einem 3D-Scanner 30 das Bearbeitungswerkzeug 12 vermessen, also ein dreidimensionales Oberflächenabbild des Bearbeitungswerkzeugs 12 erstellt.

Anhand der so ermittelten Werkzeuggeometrie 32 kann, zusammen mit dem Werkzeugweg 15, eine virtuelle Werkstückkontur 40 bestimmt werden, vergleiche die punktierte Darstellung. Durch einen Vergleich der virtuellen Werkstückkontur 40 mit einem Soll-Zustand 41 (strichlierte Darstellung) kann eine Abweichung 45 bestimmt werden. Die Abweichung 45 bildet hierbei den bspw. verschleißbedingten Einfluss der Bearbeitungsmaschine 11 und des Bearbeitungswerkzeugs 12 ab.

Zusätzlich wird während der spanenden Bearbeitung des Werkstücks 20 zumindest ein Prozessparameter 25 ausgelesen, im vorliegenden Beispiel ein Drehmoment 26 des Bearbeitungswerkzeugs 12. Dieses bildet einen dynamischen Prozess Einfluss ab.

Mit einem Machine-Learning-System 50 kann dann anhand des zumindest einen Prozessparameters 25, der während der spanenden Bearbeitung erfasst wird, und der virtuellen Werkstückkontur 40 bzw. Abweichung 45 ein Qualitätsmerkmal 60 bestimmt werden, nämlich eine geometrische Abweichung 61 des bearbeiteten Werkstücks 20 von einem Soll-Zustand. Beim Trainieren des MLS 50 wird die Abweichung 65 an entsprechend spanend bearbeiteten Bauteilen 20 gemessen, also an zumindest einigen Stellen 65.1-65.3.

Als Eingangsdaten werden die geometrischen Abweichung zum Sollmodell (Distanz) und das Drehmoment an der Stelle der Abweichung ausgewertet. Mit diesen beiden Parametern wird ein lineares Modell aufgestellt, dass die geometrischen Messdaten (Abweichungen zum Soll) gemessen auf einer Messmaschine als Zielgröße beschreibt. Zum Training dieses Modells (Parameteranpassung) werden Daten aus einer Fertigungshistorie verwendet, diese umfassen 50 - 100 Bauteile.

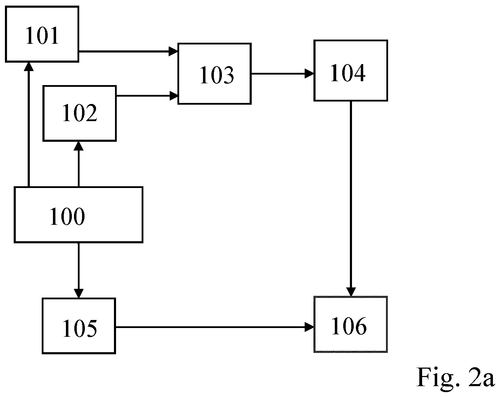

**Figur 2a** fasst einige Schritte beim Bestimmen eines Qualitätsmerkmals eines spanend bearbeiteten Werkstücks zusammen. Während des spanenden Bearbeitens 100 des Werkstücks wird der Werkzeugweg, entlang welchem das Bearbeitungswerkzeug bewegt wird, bestimmt 101. Ferner wird die Werkzeuggeometrie vermessen 102, wobei anhand der Werkzeuggeometrie und des Werkzeugwegs die virtuelle Werkstückkontur bestimmt wird 103. Anhand der virtuellen Werkstückkontur wird die Abweichung von einem Soll-Zustand ermittelt 104.

Während der spanenden Bearbeitung wird ferner zumindest ein Prozessparameter bestimmt 105, bevorzugt das Spindeldrehmoment. Anhand des zumindest einen Prozessparameters und der Abweichung der virtuellen Bauteilkontur wird dann die geometrische Abweichung des Werkstücks von dem Soll-Zustand vorhergesagt 106.

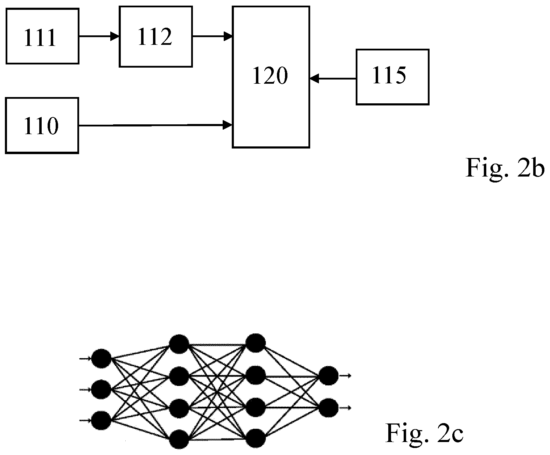

**Figur 2b** fasst die Verfahrensschritte beim Trainieren des MLS zusammen. Hierbei wird der zumindest eine Prozessparameter eingelesen 110, vorzugsweise das Spindeldrehmoment. Ferner wird die virtuelle Werkstückkontur eingelesen 111 und wird ihre Abweichung von dem Soll-Zustand ermittelt 112. An zumindest einigen Stellen des bearbeiteten Werkstücks wird die geometrische Abweichung gemessen 115, wobei diese Messung mit der anhand des Prozessparameters und der Abweichung vorhergesagten geometrischen Abweichung abgeglichen wird 120.

**Figur 2c** illustriert in vereinfachter Darstellung ein Künstliches Neuronales Netzwerk KNN, welches eine Eingabeschicht (in der Figur links) und eine Ausgebeschicht (in der Figur rechts) aufweist. Dazwischen sind mehrere verdeckte Schichten angeordnet, wobei vorliegend nur zwei verdeckte Schichten dargestellt sind. Ein tatsächliches KNN kann bspw. zehn verdeckte Schichten haben, also mit Ein- und Ausgabeschicht insgesamt zwölf Schichten.

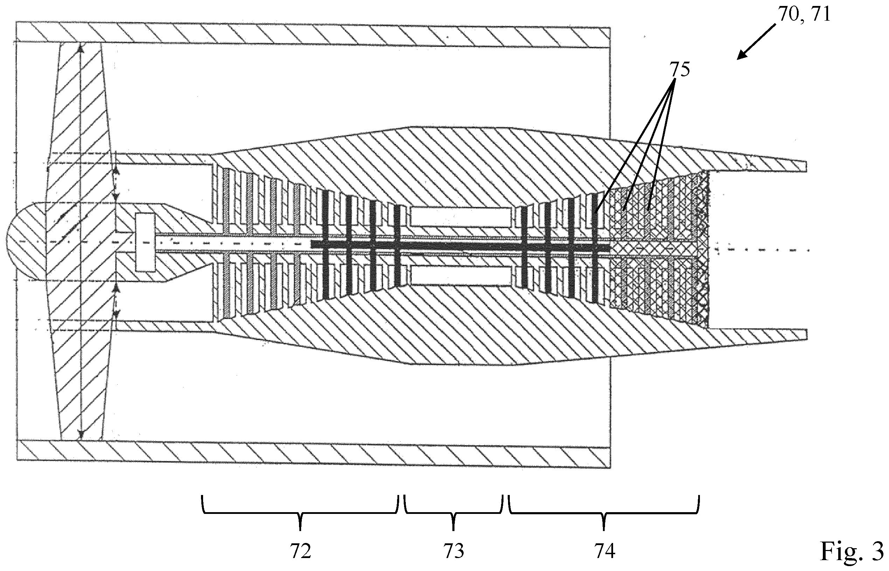

**Figur 3** zeigt eine axiale Strömungsmaschine 70, konkret ein Flugtriebwerk 71. Dieses gliedert sich funktional in Verdichter 72, Brennkammer 73 und Turbine 74, wobei sowohl der Verdichter 72 als auch die Turbine 74 aus mehreren Stufen mit jeweils einem Stator und einem Rotor aufgebaut sind (nicht im Einzelnen referenziert). Im Verdichter 72 wird angesaugte Luft komprimiert, diese wird dann in der Brennkammer 73 mit hinzugemischtem Treibstoff verbrannt, bspw. Kerosin. Das entstehende Heißgas wird in der Turbine 74 expandiert, wobei die gewonnene kinetische Energie zum Antreiben des Verdichters 72 und zur Vorschuberzeugung genutzt wird. Aufgrund der hohen mechanischen und/oder thermischen Belastungen können besondere Qualitätsanforderungen an verschiedene Bauteile 75 bestehen, wobei hier nur exemplarisch einige Rotorscheiben referenziert sind.

**BEZUGSZEICHENLISTE**

| | |
|---|---|
| System | 10 |
| Bearbeitungsmaschine | 11 |
| Bearbeitungswerkzeug | 12 |
| Fräswerkzeug | 13 |
| Steuereinheit | 14 |
| Werkzeugweg | 15 |
| Werkstück | 20 |
| Prozessparameter (dynamisch) | 25 |
| Drehmoment | 26 |
| 3D-Scanner | 30 |
| Ermittelte Werkzeuggeometrie | 32 |
| virtuelle Werkstückkontur | 40 |
| Soll-Zustand | 41 |
| Abweichung | 45 |
| Machine-Learning-System (MLS) | 50 |
| Qualitätsmerkmal | 60 |
| geometrische Abweichung | 61 |
| Einige Stellen (Messung) | 65.1-65.3. |
| Bearbeitens (Werkstück) | 100 |
| Bestimmen (Werkzeugweg) | 101 |
| Vermessen (Werkzeuggeometrie) | 102 |
| Bestimmen (virtuelle Werkstückkontur) | 103 |
| Ermitteln (Abweichung von Soll-Zustand) | 104 |
| Bestimmen (dynamischer Prozessparameter) | 105 |
| Vorhersagen (geometrische Abweichung) | 106 |
| Einlesen (dynamischer Prozessparameter) | 110 |
| Einlesen (virtuelle Werkstückkontur) | 111 |
| Ermitteln (Abweichung) | 112 |
| Messen (geometrische Abweichung) | 115 |
| Abgleichen | 120 |
| Koordinaten (maschinenintern, Achsen) | a, b, c |
| Positionskoordinaten | x, y, z |

## Patentansprüche

1. Verfahren zum Bestimmen eines Qualitätsmerkmals (60) eines Werkstücks (20), das spanend bearbeitet wird, umfassend die Schritte:
- Spanendes Bearbeiten (100) des Werkstücks (20) mit einem Bearbeitungswerkzeug (12);
- Bestimmen (101) eines Werkzeugweges (15) des Bearbeitungswerkzeugs (12) und zumindest eines dynamischen Prozessparameters (25) während des Bearbeitens;
- Bestimmen (103) einer virtuellen Werkstückkontur (40) des Werkstücks (20) anhand einer Werkzeuggeometrie (32) des Bearbeitungswerkzeugs (12) und des erfassten Werkzeugweges (15);
- Ermitteln (104) einer Abweichung (45) der virtuellen Werkstückkontur (40) von einem Soll-Zustand (41) an zumindest einigen Stellen der virtuellen Werkstückkontur (40);
- Vorhersagen (106) einer geometrischen Abweichung (65) des bearbeiteten Werkstücks (20) von einem Soll-Zustand mithilfe eines Machine-Learning-Systems (50), anhand
o der Abweichung (45) der virtuellen Werkstückkontur (40);
o des zumindest einen dynamischen Prozessparameters (25).

2. Verfahren nach Anspruch 1, bei welchem die Werkzeuggeometrie (32) durch Vermessen (102) des Bearbeitungswerkzeugs (12) bestimmt wird und die virtuelle Werkstückkontur (40) anhand der gemessenen Werkzeuggeometrie (32) bestimmt wird.

3. Verfahren nach Anspruch 1 oder 2, bei welchem der zumindest eine dynamische Prozessparameter (25) während des spanenden Bearbeitens (100) des Werkstücks (20) gemessen wird.

4. Verfahren nach einem der vorstehenden Ansprüche, bei welchem der zumindest eine dynamische Prozessparameter (25) ein Drehmoment des Bearbeitungswerkzeugs (12) umfasst und/oder bei welchem das Vorhersagen (106) einer geometrischen Abweichung (65) des bearbeiteten Werkstücks (20) von einem Soll-Zustand mithilfe eines Machine-Learning-Systems (50), zusätzlich anhand einer Positioniergenauigkeit erfolgt.

5. Verfahren nach einem der vorstehenden Ansprüche, bei welchem der Werkzeugweg (15) aus einer Bearbeitungsmaschine (11), in welcher das Werkstück (20) mit dem Bearbeitungswerkzeug (12) bearbeitet wird, ausgelesen wird und die virtuelle Werkstückkontur (40) anhand des ausgelesenen Werkzeugwegs (15) bestimmt wird.

6. Verfahren nach einem der vorstehenden Ansprüche, bei welchem eine Werkzeugorientierung aus einer Bearbeitungsmaschine (11), in welcher das Werkstück (20) mit dem Bearbeitungswerkzeug (12) bearbeitet wird, ausgelesen wird und die virtuelle Werkstückkontur (40) anhand der ausgelesenen Werkzeugorientierung bestimmt wird.

7. Verfahren nach Anspruch 5 oder 6, bei welchem eine aus der Bearbeitungsmaschine (11) ausgelesene Größe einer Datentransformation unterzogen wird, insbesondere aus einem Koordinatensystem der Bearbeitungsmaschine (11) in ein Koordinatensystem des Werkstücks (20).

8. Verfahren nach einem der vorstehenden Ansprüche, bei welchem das Machine-Learning-System (50) zumindest eines der folgenden Modelle umfasst: lineares Modell, nicht-lineares Modell, ein Künstliches Neuronales Netz (KNN), random forest, decision tree, support vector machine, Gradient Boosting Machines, Ridge Regression, Lasso Regression, Polynomial Regression.

9. Verfahren zum Herstellen eines Bauteils (75) für eine Strömungsmaschine (70), bei welchem
- das Bauteil (75) durch spanendes Bearbeiten (100) eines Werkstücks (20) mit einem Bearbeitungswerkzeug (12) hergestellt wird;
- ein Qualitätsmerkmal (160) des Werkstücks (20) gemäß einem der vorstehenden Ansprüche vorhergesagt wird.

10. Verfahren nach Anspruch 9 wobei das Bauteil (75) bevorzugt eine Scheibe, insbesondere eine Turbinen- oder Verdichterscheibe, oder eine Blisk, insbesondere eine Turbinen- oder Verdichterblisk, ist.

11. Verfahren zum Überwachen der Fertigung eines Bauteils (75), welches in einem Verfahren nach Anspruch 9 oder 10 hergestellt wird, wobei, insbesondere wenn das Qualitätsmerkmal eine vordefinierte Schwelle erreicht, eine Gegenmaßnahme ergriffen wird, insbesondere eine oder mehrere der folgenden Maßnahmen durchgeführt werden: Rekalibrieren der Fertigungsmaschine, Wartungsmaßnahmen, Prüfung und Änderung bei Fertigungshilfsmitteln.

12. Verfahren zum Trainieren eines Machine-Learning-Systems (50) zum Bestimmen eines Qualitätsmerkmals (60) eines Werkstücks (20), das mit einem Bearbeitungswerkzeug (12) spanend bearbeitet wird, umfassend die Schritte:
- Einlesen (110) zumindest eines dynamischen Prozessparameters (25), der bei einer spanenden Bearbeitung (100) des Werkstücks (20) erfasst wurde;
- Einlesen (111) einer virtuellen Werkstückkontur (40) des Werkstücks (20), welche anhand einer Werkzeuggeometrie (32) des Bearbeitungswerkzeugs (12) und eines Werkzeugweges (15) bestimmt wurde;
- Ermitteln (112) einer Abweichung (61) der virtuellen Werkstückkontur (40) von einem Soll-Zustand (41) an zumindest einigen Stellen des der virtuellen Werkstückkontur (40);
- Abgleichen
o einer an zumindest einigen Stellen des bearbeiteten Werkstücks (20) gemessenen geometrischen Abweichung von einem Soll-Zustand;
mit einer geometrischen Abweichung (65), welche das Machine-Learning-System (50), anhand
o der Abweichung (45) der virtuellen Werkstückkontur (40);
o des zumindest einen dynamischen Prozessparameters (25);
vorhersagt.

13. System (10) zum spanenden Bearbeiten eines Werkstücks (20) und Bestimmen eines Qualitätsmerkmals (60) des Werkstücks (20), mit
- einer Bearbeitungsmaschine (11) zum spanenden Bearbeiten des Werkstücks (20); wobei System (10) dazu eingerichtet ist,
- einen Werkzeugweg (15) eines Bearbeitungswerkzeugs (12) und zumindest einen dynamischen Prozessparameter (25) während des Bearbeitens zu bestimmen;
- eine virtuelle Werkstückkontur (40) des Werkstücks (20) anhand einer Werkzeuggeometrie (32) des Bearbeitungswerkzeugs (12) und des erfassten Werkzeugweges (15) zu bestimmen;
- eine Abweichung (45) der virtuellen Werkstückkontur (40) von einem Soll-Zustand (41) an zumindest einigen Stellen der virtuellen Werkstückkontur (40) zu ermitteln.

14. System (10) nach Anspruch 13, mit
- einem Machine-Learning-System (50);
wobei das Machine-Learning-System (50) dazu eingerichtet ist, eine geometrische Abweichung (65) des bearbeiteten Werkstücks (20) von einem Soll-Zustand vorherzusagen, und zwar anhand
o der Abweichung (45) der virtuellen Werkstückkontur (40);
o des zumindest einen dynamischen Prozessparameters (25).

15. Computerprogrammprodukt, umfassend Befehle, die bei einer Ausführung durch eine Rechnereinheit eines Systems (10) gemäß Anspruch 13 die Rechnereinheit veranlassen, eine geometrische Abweichung (65) des bearbeiteten Werkstücks (20) von einem Soll-Zustand vorherzusagen, und zwar anhand
o der Abweichung (45) der virtuellen Werkstückkontur (40);
o des zumindest einen dynamischen Prozessparameters (25).
